Europäisches Patentamt

European Patent Office

Office européen des brevets

(11) Numéro de publication: **0 132 419**
**B1**

# FASCICULE DE BREVET EUROPÉEN

(45) Date de publication du fascicule du brevet:
**14.01.87**

(21) Numéro de dépôt: **84401012.4**

(22) Date de dépôt: **17.05.84**

(51) Int. Cl.⁴: **F 16 L 31/00, F 16 L 41/08**

(54) Perfectionnements apportés aux raccords de dérivation obtenus par moulage d'un enrobage de matière de jonction, autour d'un insert rigide tubulaire notamment, et procédé de fabrication.

| | |
|---|---|
| (30) Priorité: **13.07.83 FR 8311695** | (73) Titulaire: **HUTCHINSON S.A., 2 rue Balzac, F-75008 Paris (FR)** |
| (43) Date de publication de la demande:<br>**30.01.85 Bulletin 85/5** | (72) Inventeur: **Grabowski, Jean, 42 Rue des Vignes, F-45120 Chalette (FR)** |
| (45) Mention de la délivrance du brevet:<br>**14.01.87 Bulletin 87/3** | (74) Mandataire: **Orès, Bernard, Cabinet ORES 6, avenue de Messine, F-75008 Paris (FR)** |
| (84) Etats contractants désignés:<br>**DE GB IT NL SE** | |
| (56) Documents cité:<br>**FR-A-2 291 441**<br>**FR-A-2 393 222**<br>**FR-A-2 506 892**<br>**US-A-3 232 645**<br>**US-A-4 076 282** | |

EP 0 132 419 B1

LIBER, STOCKHOLM 1987

## Description

La présente invention est relative à des perfectionnements apportés aux raccords de dérivation pour tuyaux souples, armés ou non, gainés ou non, obtenus par moulage d'un enrobage de matière de jonction, telle que du caoutchouc, autour d'un insert rigide tubulaire notamment, et à un procédé de fabrication de ces raccords.

On connaît déjà des raccords de dérivation obtenus par moulage d'un enrobage de matière de jonction dans deux cas différents:

- dans le cas d'un raccord de dérivation entre un tuyau principal et un tuyau secondaire, lui aussi souple, armé ou non, gainé ou non, où la matière de jonction est moulée autour des zones terminales des tuyaux principal et secondaire qui se recouvrent mutuellement, tout en laissant un accès à l'orifice de dérivation, et

- dans le cas d'un raccord de dérivation de purge, où la matière de jonction est moulée, en partie au moins, autour d'un insert rigide tubulaire fileté ou taraudé destiné à recevoir un bouchon ou une vis de purge, respectivement, et autour de l'orifice de dérivation du tuyau principal.

Dans le premier cas, le moule qui donne la forme extérieure à l'enrobage de matière de jonction est constitué par deux coquilles, tandis que dans le deuxième cas le moule est monobloc.

Le moule contient:

- un noyau rigide principal de support du tuyau principal, dans les deux cas, et

- un noyau rigide secondaire de support du tuyau secondaire, dans le premier cas, ou de support dudit insert fileté ou taraudé destiné à recevoir ledit bouchon ou ladite vis de purge, dans le deuxième cas.

Or, la mise en place et l'extraction du noyau secondaire est une opération malaisée et coûteuse, pour devenir irréalisable dans le cas d'un raccord de dérivation entre deux tuyaux principaux rapprochés et parallèles, à savoir dans le cas d'un "pontage".

La présente invention a en conséquence pour but de pourvoir à des raccords de dérivation pour tuyaux souples obtenus par moulage d'une matière de jonction, telle que du caoutchouc, autour d'un insert notamment, qui répondent mieux aux nécessités de la pratique que les raccords visant au même but antérieurement connus, notamment en ce que:

- ils sont des raccords renforcés intérieurement et/ou extérieurement,

- ils sont plus fiables que les raccords de l'Art antérieur en ce qui concerne l'étanchéité, et

- leur durée de vie est améliorée.

La présente invention a également pour but de pourvoir à un procédé de fabrication de raccords de dérivation pour tuyaux souples réalisé par moulage d'une matière de jonction, telle que du caoutchouc, qui répond mieux aux nécessités de la pratique que les procédés visant au même but antérieurement connus, notamment en ce que:

- l'opération onéreuse d'extraction du noyau secondaire est éliminée, et

- les "pontages" entre deux tuyaux principaux rapprochés et parallèles sont également rendus possibles.

La présente invention a pour objet un raccord de dérivation pour tuyaux souples, armés ou non, gainés ou non, du type comprenant un insert rigide tubulaire enrobé au moins partiellement d'une matière de jonction, telle que du caoutchouc, un tuyau souple principal, pourvu d'un orifice de dérivation percé à l'endroit choisi, et un organe à raccorder audit tuyau principal, lequel raccord de dérivation est caractérisé en ce que l'insert comprend à une extrémité une première collerette évasée appliquée contre la surface interne d'un bossage à collerette également évasée sur le pourtour dudit orifice du tuyau principal, en combinaison avec une deuxième collerette externe, et en ce que l'insert fait partie intégrante du raccord de dérivation.

Selon un mode de réalisation avantageux du raccord conforme à l'invention, dans le cas où l'organe à raccorder au tuyau principal est constitué par un tuyau secondaire, lui aussi souple, armé ou non, gainé ou non, la deuxième collerette de l'insert est une collerette annulaire de positionnement de ce tuyau secondaire ménagée sur la surface extérieure de ce dernier, en position intermédiaire appropriée.

Selon un autre mode de réalisation avantageux du raccord de dérivation conforme à l'invention, dans le cas où l'organe à raccorder au tuyau principal est constitué par un tuyau souple secondaire, l'insert coopère avec un doigt de centrage de ce dernier par rapport au tuyau principal.

Selon encore un autre mode de réalisation avantageux du raccord de dérivation conforme à l'invention,dans le cas où l'organe à raccorder au tuyau souple principal est constitué par un tuyau souple secondaire, l'autre extrémité de l'insert est pourvue de crans qui empéchent l'arrachage du tuyau secondaire.

Selon un autre mode de réalisation avantageux du raccord de dérivation conforme à l'invention, dans le cas où l'organe à raccorder au tuyau souple principal est constitué par un tuyau souple secondaire, la matière de jonction moulée autour des tuyaux principal et secondaire del'insert a la forme d'un T, dont le segment transversal enveloppe complètement la portion correspondante du tuyau principal, tandis que le segment longitudinal du T enveloppe complètement la portion correspondante du tuyau secondaire, ainsi que la partie de l'insert comprise entre sa collerette êvasée d'extrémité et sa collerette annulaire intermédiaire.

Selon un mode de réalisation avantageux du raccord conforme à l'invention, dans le cas où l'organe à raccorder au tuyau principal est constitué par un autre tuyau principal rapproché et parallèle au premier, lui aussi souple, armé ou non, gainé ou non, la deuxième collerette de l'insert est une collerette également évasée qui est ménagée à l'autre extrémité de l'insert et qui s'applique contre la surface interne du bossage à collerette encore également évasée ménagé sur le pourtour de l'orifice de dérivation percé dans l'autre tuyau principal.

Selon un autre mode de réalisation avantageux du raccord de dérivation conforme à l'invention, dans le cas où l'organe à raccorder au tuyau principal est constitué par un autre tuyau principal rapproché et parallèle au premier, la matière de jonction, moulée autour des deux tuyaux principaux et de l'insert, à la forme d'un I, dont chaque segment transversal enveloppe complètement la portion correspondante de chaque tuyau principal, tandis que le segment longitudinal du 1 enveloppe complètement ledit insert.

Selon encore un autre mode de réalisation du raccord conforme à l'invention, dans le cas où l'insert est constitué par un insert taraudé, destiné à recevoir une vis de purge la deuxième collerette de l'isert est une collerette annulaire d'accrochage de la matière de jonction moulée, ménagée autour de l'autre extrémité de l'insert.

La présente invention a également pour objet un procédé de fabrication d'un raccord de dérivation pour tuyaux souples, armés ou non, gainés ou non, du type comportant le moulage d'un enrobage de matière de jonction, telle que du caoutchouc, autour d'une partie au moins d'un insert rigide tubulaire compris dans le raccord de dérivation, et la mise en place préalable d'un noyau rigide de support d'un tuyau principal, pourvu d'un orifice de dérivation percé à l'endroit choisi, ainsi que d'un noyau rigide secondaire de support d'un organe à raccorder audit tuyau principal, lequel procédé est caractérisé en ce que le noyau secondaire présente une forme tubulaire appropriée comprenant à une extrémité une première collerette évasée, destinée à s'appliquer contre la surface interne d'un bossage à collerette également évasée sur le pourtour dudit orifice du tuyau principal, en combinaison avec une deuxième collerette externe, et en ce que, le moulage de ladite matière de jonction étant réalisé de la manière connue, seul le noyau principal est extrait une fois que le moulage est terminé, tandis que le noyau secondaire est laissé en place comme insert faisant partie intégrante du raccord de dérivation moulé, laquelle deuxième collerette étant une collerette annulaire intermédiaire, ou une autre collerette évasée d'extrémité, ou encore une collerette annulaire d'extrémité, selon que ledit organe est un tuyau souple secondaire, ou un autre tuyau souple principal, ou encore une vis de purge, respectivement.

Outre les dispositions qui précèdent, l'invention comprend encore d'autres dispositions qui ressortiront de la description qui va suivre.

L'invention sera mieux comprise à l'aide du complément de description qui va suivre, qui se réfère aux dessins annexés dans lesquels:

- la figure 1 représente un raccord de dérivation entre un tuyau principal et un tuyau souple secondaire, obtenu selon le procédé conforme à la présente invention;

- la figure 2 représente un raccord de dérivation entre deux tuyaux souples principaux, rapprochés et parallèles, obtenu également selon le procédé conforme à l'invention, et

- la figure 3 représente un raccord de dérivation de purge, lui aussi réalisé selon le procédé objet de cette invention.

Le procédé de fabrication d'un raccord de dérivation pour toyaux souples, armés ou non, gainés ou non, selon l'invention, présente un avantage indiscutable par rapport aux procédés de l'Art antérieur comportant également le moulage d'un enrobage de matière de jonction, telle que du caoutchouc, et la mise en place préalable d'un noyau rigide principal de support d'un tuyau souple principal, pourvu d'un bossage à collerette évasée sur le pourtour d'un orifice de dérivation percé dans ce tuyau principal, ainsi que d'un noyau rigide secondaire de support d'un organe à raccorder audit tuyau principal; cet avantage est constitué par l'élimination de l'opération coûteuse consistant en l'extraction, en particulier, du noyau secondaire après le moulage de la matière de jonction: en fait, après le moulage, on extrait seulement le noyau principal, tandis que le noyau secondaire est laissé en place comme insert faisant partie intégrante du raccord de dérivation et entouré, au moins partiellement, de ladite matière de jonction.

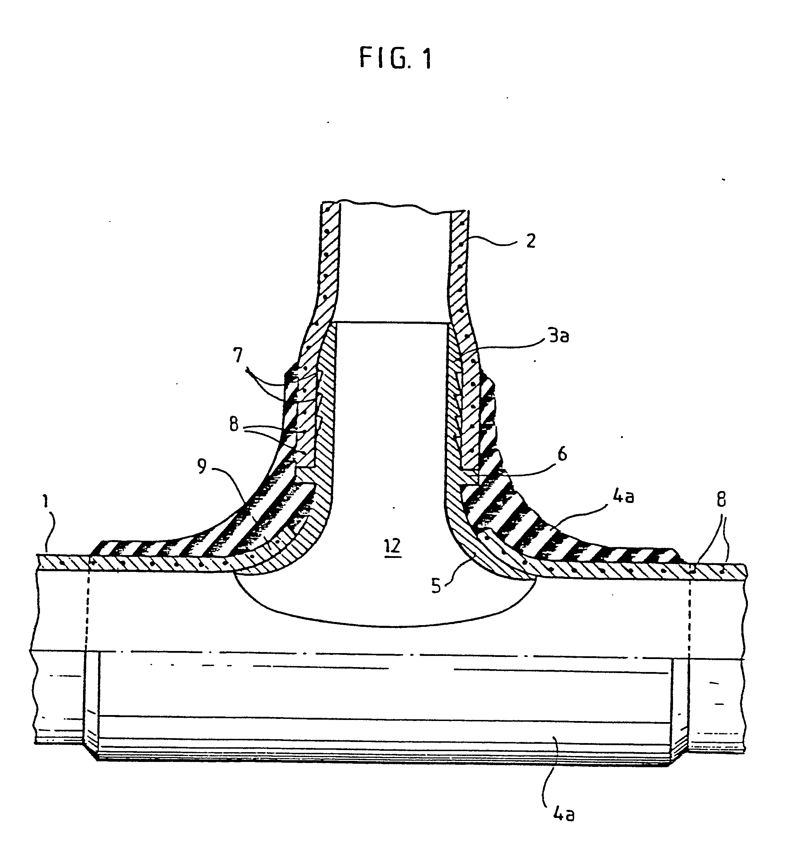

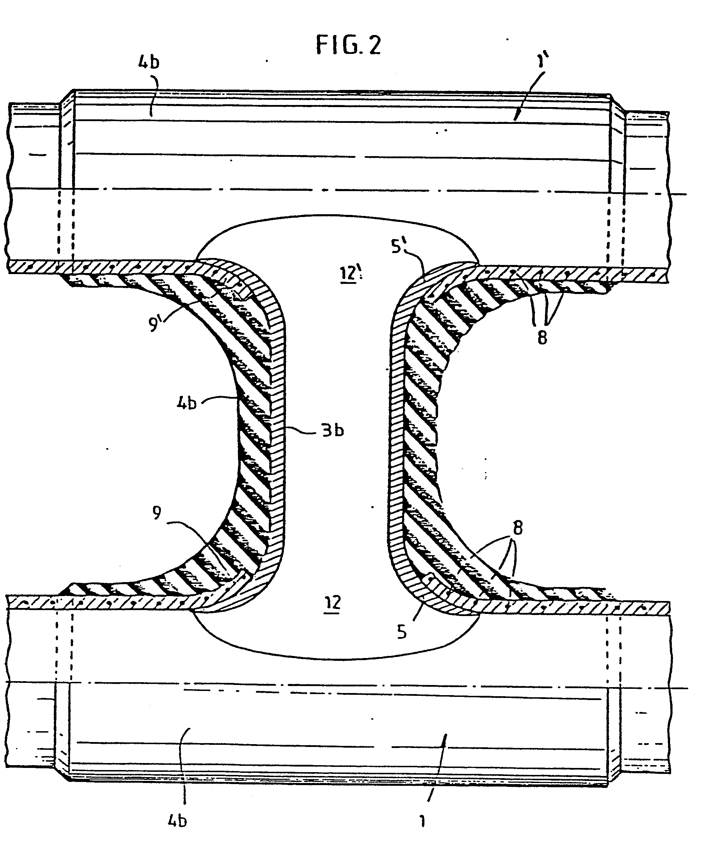

Il va de soi que l'avantage du procédé ne se limite pas seulement au fait qu'il n'est pas nécessaire d'extraire le noyau secondaire: en effet, la présence de ce dernier augmente considérablement la rigidité du raccord, ainsi que sa durée de vie et son étanchéité, grâce à une conformation appropriée du noyau secondaire ainsi qu'il est précisé dans la description des différents types de raccords de dérivation pour tuyaux souples, représentés aux figures 1 à 3: en particulier, le procédé selon l'invention rend possible la réalisation d'un "pontage" entre deux tuyaux souples principaux rapprochés et parallèles (cf. la figure 2) ce qu'il n'était pas possible d'obtenir par les procédés de l'Art antérieur qui ne peuvent pas s'appliquer dans ce cas car l'extraction du noyau secondaire n'est pas possible.

La figure 1 se réfère à un premier raccord de dérivation pour tuyaux souples, conforme au procédé selon l'invention, réalisé entre un tuyau souple principal 1 et un tuyau souple secondaire 2.

L'insert rigide 3a de support du tuyau secondaire 2 est laissé en place comme noyau rigide perdu, ou comme insert rigide tubulaire faisant partie intégrante du raccord de dérivation, une fois que le moulage de l'enrobage de matière de jonction 4a est terminé.

L'insert rigide 3a est pourvu à l'extrémité inférieure d'une collerette évasée 5, qui donne à l'insert 3a la forme d'une trompette, et qui s'applique contre la surface interne d'un bossage 9 à collerette également évasée dont est pourvu le pourtour de l'orifice de dérivation 12 percé dans le tuyau principal 1.

Cette collerette évasée 5 maintient solidement en position le bossage 9 du tuyau souple principal 1 en le protégeant de tout décollage accidentel, ce qui peut devenir nuisible pour l'étanchéité du raccord de dérivation, si le décollage s'étend latéralement.

Toujours en ce qui concerne la figure 1, l'insert 3a est pourvu d'une collerette annulaire 6 ménagée en position intermédiaire sur sa surface extérieure, de façon à permettre le positionnement de l'extrémité terminale du tuyau secondaire 2.

L'extrémité supérieure de l'insert 3a, enveloppée par l'extrémité du tuyau secondaire 2, est avantageusement pourvue de crans qui empêchent l'arrachage accidentel de ce tuyau 2; en même temps l'extrémité crantée de l'insert 3a maintient solidement en position l'extrémité du tuyau souple secondaire 2 qui est également protégée de tout décollage accidentel et danger de perte d'étanchéité.

Il va de soi que la protection contre le décollage accidentel du bossage du tuyau souple principal 1 et de l'extrémité du tuyau souple secondaire 2 entraîne également la protection de l'armature S de tout contact avec le fluide véhiculé.

Ledit insert 3a coopère avec un doigt de centrage (non représenté) du tuyau souple secondaire 2 (qui peut présenter a priori une orientation quelconque) par rapport au tuyau souple principal 1.

La forme extérieure de la matière de jonction 4a moulée contribue au renforcement du raccord de dérivation dans son ensemble et à augmenter sa durée de vie: l'enrobage 4a représenté â la figure 1 a la forme d'un T, notamment d'un T inversé, dont le segment transversal enveloppe complètement la portion correspondante du tuyau principal 1, tandis que le segment longitudinal de ce T enveloppe complètement la portion correspondante du tuyau secondaire 2 ainsi que la partie de l'insert 3a comprise entre sa collerette évasée 5 d'extrémité et sa collerette annulaire 6 intermédiaire.

La figure 2 se réfère à un deuxième raccord de dérivation pour tuyaux souples réalisé entre deux tuyaux souples principaux 1 et 1'.

Dans ce cas également le noyau rigide secondaire 3b est laissé en place comme noyau rigide perdu ou comme insert rigide tubulaire faisant partie intégrante du raccord de dérivation, une fois que le moulage de l'enrobage de matière de jonction 4b est terminé, augmentant ainsi la rigidité, l'étanchéité et la durée de vie de ce raccord de dérivation: il est par ailleurs évident que c'est grâce à la mise en place de cet insert rigide 3b que le "pontage" est rendu possible.

Le noyau secondaire 3b est pourvu, dans ce cas, à chaque extrémité, d'une collerette évasée 5 et 5' respectivement, qui s'applique contre la surface interne de chacun des bossages 9 et 9' à collerette également évasée ménagé sur le pourtour des orifices de dérivation 12 et 12' percés dans les deux tuyaux souples principaux 1 et 1', respectivement.

Les deux collerettes évasées 5 et 5' d'extrémité de l'insert 3b protègent contre le décollement les bossages 9 et 9',respectivement, qui s'appliquent contre elles et, par cela même, contribuent à l'étanchéité du raccord, empêchant tout contact entre l'armature S des deux tuyaux souples principaux 1 et 1' et le fluide véhiculé.

En ce qui concerne la forme extérieure de la matière de jonction 4b, celle-ci contribue également dans ce cas à la solidité du raccord de dérivation dans son ensemble et à augmenter sa durée de vie: l'enrobage 4b représenté à la figure 2 a la forme d'un 1, dont chaque segment transversal enveloppe complètement la portion correspondante de chacun des tuyaux principaux 1 et 1', tandis que le segment longitudinal du 1 enveloppe complè-tement ledit insert rigide tubulaire 3a.

La réalisation d'un raccord de dérivation comme celui représenté â la figure 2, à savoir d'un "pontage", est effectuée de préférence entre tuyaux souples principaux rapprochés, c'est-à-dire quand la distance qui les sépare est inférieuré ou égale à 30 mm environ. Dans le cas de tuyaux principaux plus éloignés on peut les raccorder à l'aide d'un tuyau souple secondaire dont les extrémités sont raccordées comme indiqué â la figure 1.

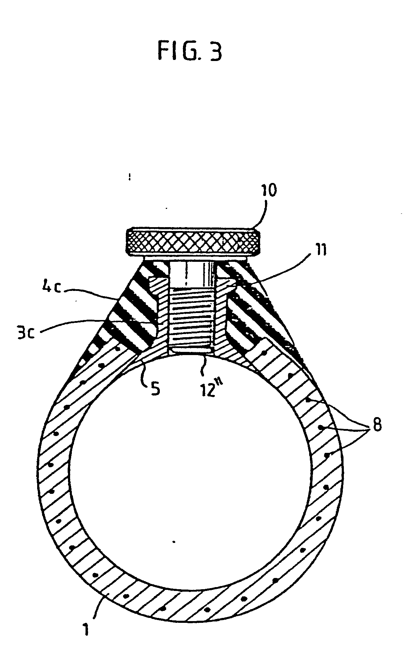

Le raccord de dérivation représenté â la figure 3 se réfère à un raccord de dérivation de purge.

Dans l'Art antérieur on utilisait dans ce cas un insert taraudé, destiné à recevoir une vis de purge notamment, qui était raccordé â un tuyau souple principal par moulage d'un enrobage de matière de jonction,après avoir mis en place au préalable l'insert et un noyau rigide secondaire amovible de support de cet insert,assemblés entre eux par vissage notamment, et un noyau rigide principal également amovible, de support du tuyau souple principal, ce noyau principal amovible étant assemblé également par vissage avec le noyau amovible secondaire.

L'avantage du procédé conforme à la présente invention réside dans le fait que l'insert taraudé est constitué par le noyau rigide secondaire 3c (cf. la figure 3) qui est laissé en place, après le moulage, comme insert rigide tubulaire 3c destiné à recevoir une vis de purge 10.

Ce noyau secondaire 3c est pourvu à son extrémité inférieure d'une collerette évasée 5 s'appliquant contre la surface interne du bossage 9, à collerette également évasée, ménagé sur le pourtour de l'orifice de dérivation 12" percé dans le tuyau principal 1, en protégeant ce bossage 9 contre un décollage accidentel et donc l'armature 8 du tuyau principal 1 contre tout contact avec le fluide véhiculé.

L'insert 3c est également pourvu d'une collerette annulaire 11 à l'autre extrémité, de façon à permettre l'accrochage de la matière de jonction moulée 4c.

## Revendications

1.- Raccord de dérivation pour tuyaux souples, armés ou non, gainés ou non, du type comprenant un insert rigide tubulaire enrobé au moins partiellement d'une matière de jonction, telle que du caoutchouc, un tuyau souple principal (1), pourvu d'un orifice de dérivation percé à l'endroit choisi, et un organe (2,1',10) à raccorder audit tuyau principal, lequel raccord de dérivation est caractérisé en ce que l'insert (3a, 3b, 3c) comprend à une extrémité une première collerette évasée (5), appliquer contre la surface interne d'un bossage (9) à collerette également évasée sur le pourtour dudit orifice du tuyau principal (1), en combinaison avec une deuxième collerette externe (6, 5', 11), et en ce que l'insert (3a, 3b, 3c) fait partie intégrante du raccord de dérivation.

2.- Raccord de dérivation selon la revendication 1, caractérisé en ce que,dans le cas où l'organe à raccorder au tuyau principal (1) est constitué par un tuyau secondaire (2), lui aussi souple, armé ou non, gainé ou non, la deuxième collerette de l'insert (3a)est une collerette annulaire (6) de positionnement de ce tuyau secondaire (2) ménagée sur la surface extérieure de ce dernier, en position intermédiaire appropriée.

3.- Raccord de dérivation selon les revendications 1 et 2, caractérisé en ce que dans le cas où l'organe à raccorder au tuyau principal (1) est constitué par un tuyau souple secondaire (2), l'insert (3a) coopère avec un doigt de centrage de ce dernier par rapport au tuyau principal (1)

4.- Raccord de dérivation selon les revendications 1 à 3, caractérisé en ce que dans le cas où l'organe à raccorder au tuyau souple principal (1) est constitué par un tuyau souple secondaire (2), l'autre extrémité de l'insert (3a) est pourvue de crans (7) qui empêchent l'arrachage du tuyau secondaire (2).

5.- Raccord de dérivation selon les revendications 1 à 4, caractérisé en ce que,dans le cas où l'organe à raccorder au tuyau souple principal (1) est constitué par un tuyau souple secondaire (2), la matière de jonction (4a) moulée autour des tuyaux principal (1) et secondaire (2) et de l'insert (3a) a la forme d'un T, dont le segment transversal enveloppe complètement la portion correspondante du tuyau principal (1), tandis que le segment longitudinal du T enveloppe complètement la portion correspondante du tuyau secondaire (2) ainsi que la partie de l'insert (3a) comprise entre sa collerette évasée (5) d'extrémité et sa collerette annulaire (6) intermédiaire.

6.- Raccord de dérivation selon la revendication 1, caractérisé en ce que,dans le cas où l'organe à raccorder au tuyau principal (1) est constitué par un autre tuyau principal (1') rapproché et parallèle au premier, lui aussi souple, armé ou non, gainé ou non, la deuxième collerette de l'insert (3b) est une collerette également évasée (5') qui est ménagée à l'autre extrémité de l'insert (3b) et qui s'applique contre la surface interne du bossage (9') à collerette encore également évasée ménagé sur le pourtour de l'orifice (12') de dérivation percé dans l'autre tuyau principal (1').

7.- Raccord de dérivation selon les revendications 1 et 6, caractérisé en ce que,dans le cas où l'organe à raccorder au tuyau principal (1) est constitué par un autre tuyau principal (1') rapproché et parallèle au premier, la matière de jonction (4b) moulée autour des deux tuyaux principaux (1 et 1') de l'insert (3b), a la forme d'un 1, dont chaque segment transversal enveloppe complètement la portion correspondante de chaque tuyau principal (1 et 1'), tandis que le segment longitudinal du I enveloppe complètement ledit insert (3b).

8.- Raccord de dérivation selon la revendication 1, caractérisé en ce que dans le cas où l'insert est constitué par un insert taraudé (3c) destiné à recevoir une vis de purge (10) la deuxième collerette de l'insert est une collerette annulaire (11) d'accrochage de lamatière de jonction moulée (4c), ménagée autour de l'autre extrémité de l'insert (3c).

9.- Procédé de fabrication d'un raccord de dérivation pour tuyaux souples, armés ou non, gainés ou non, du type comportant le moulage d'un enrobage de matière de jonction, telle que du caoutchouc, autour d'une partie au moins d'un insert rigide tubulaire compris dans le raccord de dérivation, et la mise en place préalable d'un noyau rigide principal de support d'un tuyau principal pourvu d'un orifice de dérivation percé à l'endroit choisi, ainsi que d'un noyau rigide secondaire de support d'un organe à raccorder audit tuyau principal, lequel procédé est caractérisé en ce que le noyau secondaire (3a, 3b, 3c) présente une forme tubulaire comprenant à une extrémité une première collerette évasée (5), destinée à s'appliquer contre la surface interne d'un bossage (9) à collerette également évasée sur le pourtour dudit orifice du tuyau principal (1) en combinaison avec une deuxième collerette externe (6, 5', 11), et en ce que, le moulage de ladite matière de jonction (4a, 4b, 4c) étant réalisé de la manière connue, seul le noyau principal est extrait une fois que le moulage est terminé, tandis que le noyau secondaire (3a, 3b, 3c) est laissé en place comme insert faisant partie intégrante du raccord de dérivation moulé, la deuxième collerette étant une collerette annulaire intermédiaire (6),ou une autre collerette évasée d'extrémité (5'), ou encore une collerette annulaire d'extrémité (11) selon que ledit organe est un tuyau souple secondaire (2), ou un autre tuyau souple principal (1'), ou encore une vis de purge (10), respectivement.

**Patentansprüche**

1. Abzweigung für biegsame verstärkte oder nicht verstärkte, ummantelte oder nicht ummantelte Schläuche mit einem steifen rohrförmigen Einsatz, der wenigstens teilweise mit einem Verbindungsmaterial wie Kautschuk ummantelt ist, mit einem biegsamen Hauptschlauch (1), der mit einer an der gewählten Stelle ausgebildeten Abzweigungsöffnung versehen ist, und mit einem mit dem Hauptschlauch zu verbindenden Teil (2, 1', 10), wobei die Abzweigung dadurch gekennzeichnet ist, daß der Einsatz (3a, 3b, 3c) an einem Ende einen ersten aufgeweiteten Kragen (5) aufweist, der gegen die Innenseite einer den äußeren Umfang der Öffnung im Hauptschlauch (1) umgebenden ebenfalls aufgeweiteten Bundwulst (9) anliegt, in Kombination mit einem zweiten externen Kragen (6, 5', 11), und daß der Einsatz (3a, 3b, 3c) den integrierenden Bestandteil der Abzweigung bildet.

2. Abzweigung nach Anspruch 1, dadurch gekennzeichnet, daß für den Fall, daß das mit dem Hauptschlauch (1) zu verbindende Teil durch einen ebenfalls verstärkten oder nicht verstärkten, ummantelten oder nicht ummantelten Zweitschlauch (2) gebildet ist, der zweite Kragen des Einsatzes (3a) ein ringförmiger Kragen (6) für die Positionierung des Hilfsschlauches (2) ist, der auf der Außenseite des Einsatzes an geeigneter Zwischenstelle ausgebildet ist.

3. Abzweigung nach den Ansprüchen 1 und 2, dadurch gekennzeichnet, daß für den Fall, daß das mit dem Hauptschlauch (1) zu verbindende Teil durch einen biegsamen Zweitschlauch (2) gebildet ist, der Einsatz (3a) mit einem Zentrierfinger des Letzteren in Bezug auf den Hauptschlauch (1) zusammenwirkt.

4. Abzweigung nach den Ansprüchen 1 bis 3, dadurch gekennzeichnet, daß für den Fall, daß das mit dem biegsamen Hauptschlauch (1) zu verbindende Teil durch einen biegsamen Zweitschlauch (2) gebildet ist, das andere Ende des Einsatzes (3a) mit Kerben (7) versehen ist, die ein Abziehen des Zweitschlauches (2) verhindern.

5. Abzweigung nach den Ansprüchen 1 bis 4, dadurch gekennzeichnet, daß für den Fall, daß das mit dem biegsamen Hauptschlauch (1) zu verbindende Teil ein biegsamer Zweitschlauch (2) ist, das um den Hauptschlauch (1), den Zweitschlauch (2) und den Einsatz (3a) gegossene Verbindungsmaterial (4a) die Form eines T hat, dessen transversales Segment vollständig den zugeordneten Abschnitt des Hauptschlauches (1) umgibt, während das longitudinale Segment des T vollständig den zugeordneten Abschnitt des Zweitschlauches (2) sowie den Teil des Einsatzes (3a) umgibt, der sich zwischen seinem endseitigen aufgeweiteten Kragen (5) und seinem ringförmigen zwischenliegenden Kragen (6) erstreckt.

6. Abzweigung nach Anspruch 1, dadurch gekennzeichnet, daß für den Fall, daß das mit dem Hauptschlauch (1) zu verbindende Teil durch einen anderen ebenfalls biegsamen, verstärkten oder nicht verstärkten, ummantelten oder nicht ummantelten, benachbarten und parallel zum ersten verlaufenden anderen Hauptschlauch (1') gebildet ist, der zweite Kragen des Einsatzes (3b) ein ebenfalls aufgeweiteter Kragen (5') ist, der am anderen Ende des Einsatzes (3b) ausgebildet ist und gegen die Innenseite der den äußeren Umfang der Abzweigungsöffnung (12') umgibt, die in dem anderen Hauptschlauch (1') ausgebildet ist.

7. Abzweigung nach den Ansprüchen 1 und 6, dadurch gekennzeichnet, daß für den Fall, daß das mit dem Hauptschlauch (1) zu verbindende Teil durch einen anderen benachbarten und parallel zum ersten verlaufenden anderen Hauptschlauch (1') gebildet ist, das um die zwei Hauptschläuche (1, 1') des Einsatzes (3b) gegossene Verbindungsmaterial (4b) die Gestalt eines I hat, dessen beiden transversalen Segmente vollständig den zugeordneten Abschnitt jeden Hauptschlauches (1, 1') umgeben, während das longitudinale Segment des I vollständig den Einsatz (3b) umgibt.

8. Abzweigung nach Anspruch 1, dadurch gekennzeichnet, daß für den Fall, daß der Einsatz durch einen Gewindeeinsatz (3c) gebildet ist, der dazu bestimmt ist, eine Ablaßschraube (10) aufzunehmen, der zweite Kragen des Einsatzes ein Ringkragen (11) zum Halten des gegossenen Verbindungsmaterials (4c) ist, der um das andere Ende des Einsatzes (3c) ausgebildet ist.

9. Verfahren zum Herstellen einer Abzweigung für biegsame, verstärkte oder nicht verstärkte, ummantelte oder nicht ummantelte Schläuche mit einem Ummantelungsguß aus Verbindungsmaterial wie Kautschuk um wenigstens einen Teil eines in der Abzweigung enthaltenen steifen rohrförmigen Einsatzes sowie zum vorhergehenden Einsetzen eines steifen Hauptkerns zum Befestigen eines Hauptschlauches, der an einer gewählten Stelle mit einer Abzweigungsöffnung versehen ist, sowie zum Einsetzen eines steifen Zweitkerns zum Befestigen eines mit dem Hauptschlauch zu verbindenden Teils, wobei das Verfahren dadurch gekennzeichnet ist, daß der Zweitkern (3a, 3b, 3c) eine Rohrform aufweist, die an einem Ende über einen ersten aufgeweiteten Kragen (5) verfügt, der dazu bestimmt ist, sich gegen die Innenseite einer ebenfalls aufgeweiteten, um die Öffnung des Hauptschlauches ausgebildeten Bundwulstes (9) anzulegen, in Kombination mit einem zweiten externen Kragen (6, 5', 11), und daß der Guß des Verbindungsmaterials (4a, 4b, 4c) in bekannter Weise ausgeführt wird, wobei der Hauptkern herausgezogen wird, wenn der Guß beendet ist, während der Zweitkern (3a, 3b, 3c) als Einsatz an seiner Stelle belassen wird und einen integrierenden Bestandteil der gegossenen Abzweigung bildet, wobei der zweite Kragen ein Ringzwischenkragen (6) oder ein anderer am Ende (5') ausgebildeter aufgeweiteter Kragen oder auch ein am Ende (11) ausgebildeter Ringkragen je nach dem ist, ob das Teil ein biegsamer Zweitschlauch (2) oder ein anderer biegsamer Hauptschlauch (1') oder eine Ablaßschraube (10) ist.

## Claims

1. A branch connection for flexible pipes, whether reinforced or not and whether sheathed or not, of the type comprising a rigid tubular insert at least partially covered with a joining material such as rubber, a main flexible pipe (1) provided with a branch opening made at the selected place, and a member (2,1',10) to be connected to said main pipe, which branch connection is characterised in that the insert (3a, 3b, 3c) comprises, at one end, a first widened flange (5) applied against the internal surface of a boss (9) likewise having a widened flange over the periphery of said opening in the main pipe (1), in combination with a second, external flange (6,5',11), and in that the insert (3a, 3b, 3c) forms an integral part of the branch connection.

2. A branch connection according to Claim 1, characterised in that, in the case where the member to be connected to the main pipe (1) consists of a secondary pipe (2), which is also flexible, may or may not be reinforced and may or may not be sheathed, the second flange of the insert (3a) is an annular flange (6) for positioning this secondary pipe (2), being formed on the outer surface of the latter, at an appropriate intermediate position.

3. A branch connection according to Claims 1 and 2, characterised in that, in the case where the member to be connected to the main pipe (1) consists of a secondary flexible pipe (2), the insert (3a) cooperates with a finger for centring the latter in relation to the main pipe (1).

4. A branch connection according to Claims 1 to 3, characterised in that, in the case where the member to be connected to the main flexible pipe (1) consists of a secondary flexible pipe (2), the other end of the insert (3a) is provided with notches (7) which prevent the secondary pipe (2) from being pulled out.

5. A branch connection according to Claims 1 to 4, characterised in that, in the case where the member to connected to the main flexible pipe (1) consists of a secondary flexible pipe (2), the joining material (4a) moulded round the main (1) and secondary (2) pipes and the insert (3a) has the shape of a T, of which the transverse segment completely surrounds the corresponding portion of the main pipe (1), while the longitudinal segment of the T completely surrounds the corresponding portion of the secondary pipe (2) as well as the portion of the insert (3a) comprised between its widened end flange (5) and its intermediate annular flange (6).

6. A branch connection according to Claim 1, characterised in that, in the case where the member to be connected to the main pipe (1) consists of another main pipe (1') which is close to and parallel to the first, and which is also flexible and may or may not be reinforced and may or may not be sheathed, the second flange of the insert (3b) is a flange which is likewise widened out (5') and is formed at the other end of the insert (3b) and which is applied against the internal surface of the boss (9') which likewise has a widended flange formed over the periphery of the branch opening (12') made in the other main pipe (1').

7. A branch connection according to Claims 1 and 6, characterised in that, in the case where the member to be connected to the main pipe (1) consists of another main pipe (1'), which is close to and parallel to the first, the joining material (4b) moulded round the two main pipes (1 and 1') of the insert (3b) has the shape of an I, each transverse segment of which completely surrounds the corresponding portion of each main pipe (1 and 1') while the longitudinal segment of the I completely surrounds said insert (3b).

8. A branch connection according to Claim 1, characterised in that, in the case where the insert consists of a tapped insert (3c) adapted to receive a bleed screw (10), the second flange of the insert is an annular flange (11) for the moulded joining material (4c) provided round the other end of the insert (3c) to hook onto.

9. A method of producing a branch connection for flexible pipes, whether reinforced or not and whether sheathed or not, of the type comprising the moulding of a covering of joining material, such as rubber, round at least one portion of a rigid tubular insert comprised in the branch connection and the previous placing in position of a main rigid core for supporting a main pipe provided with a branch opening made at the selected place, as well as a secondary rigid core for supporting a member to be connected to said main pipe, which method is characterised in that the secondary core (3a, 3b, 3c) has a tubular shape comprising, at one end, a first widened flange (5) adapted to be applied against the internal surface of a boss (9) having a flange which is likewise widened out over the periphery of said opening in the main pipe (1), in combination with a second external flange (6, 5', 11), and in that, the moulding of said joining material (4a, 4b, 4c) being effected in the known manner, only the main core is pulled out once the moulding is finished while the secondary core (3a, 3b, 3c) is left in position as an insert forming an integral portion of the moulded branch connection, the second flange being an intermediate annular flange (6) or another widened out end flange (5') or an annular end flange (11) according to whether said member is a secondary flexible pipe (2) or another main flexible pipe (1') or a bleed screw (10), respectively.

# FIG. 1

# FIG. 2

FIG. 3